# EUROPEAN PATENT APPLICATION

(11) **EP 4 729 551 A1**
(43) Date of publication of application: **22.04.2026**
(21) Application number: 24823481.7
(22) Date of filing: 14.06.2024
(51) Int. Cl.: C08F 214/26, C08F 210/02, C08F 214/18, C08F 216/14, C08L 27/18

(54) **COPOLYMER, COMPOSITION, AND MOLDED ARTICLE**

(30) Priority: 16.06.2023 JP 2023099581
(71) Applicant: AGC Inc., Chiyoda-ku Tokyo 100-8405 (JP)
(72) Inventor: TAGUCHI, Daisuke, Tokyo 100-8405 (JP); TOYODA, Mizuna, Tokyo 100-8405 (JP)
(74) Representative: Müller-Boré & Partner Patentanwälte PartG mbB
(86) International application number: PCT/JP2024/021741
(87) International publication number: WO 2024/257868

(57) **Abstract**

To provide a copolymer from which a molded product excellent in tensile strength after chemical resistance test, tensile strength after heat aging test and tensile elongation after heat aging test can be formed, a composition and a molded product. The copolymer of the present invention is a copolymer containing units based on tetrafluoroethylene, units based on ethylene, and one or both of units based on a compound represented by the formula (1) and units based on a compound represented by the formula (2), wherein the total content of the units based on tetrafluoroethylene and the units based on ethylene is 80.0 to 98.1 mol% to all units contained in the copolymer; the content of the units based on tetrafluoroethylene is 49.0 mol% or more and less than 56.0 mol% to the total content of the units based on tetrafluoroethylene and the units based on ethylene; the content of the units based on the compound represented by the formula (1) or the compound represented by the formula (2) is 1.9 mol% or more and less than 3.2 mol% to all units contained in the copolymer; and the melt flow rate as measured in accordance with ASTM D3159 at a temperature of 297°C under a load of 49N is 33 to 50 g/10 min:

CZ₂=CX(CF₂)ₘY formula (1)

CF₂=CF-O-(CF₂)ₙF formula (2)

## Description

### TECHNICAL FIELD

The present invention relates to a copolymer, a composition and a molded product.

### BACKGROUND ART

An ethylene/tetrafluoroethylene copolymer (hereinafter sometimes referred to also as "ETFE") is excellent in heat resistance, weather resistance, electrical insulting property, non-stickiness, water/oil repellency, etc. and further has high moldability and mechanical strength among fluororesins. Accordingly, it can be formed into various molded products such as electric wire coverings, tubes, sheets, films, filaments, pump cases, joints, packings, linings and coating, by melt-molding methods such as extrusion, blow molding, injection molding and rotational molding.

For example, Patent Document 1 discloses a polymer composition containing a copolymer having ethylene units, tetrafluoroethylene units and other units.

### PRIOR ART DOCUMENTS

### PATENT DOCUMENTS

Patent Document 1: Chinese Patent Publication No.104151754

### DISCLOSURE OF INVENTION

### TECHNICAL PROBLEM

In a case where ETFE is used as a constituent of a molded product, it is required to have excellent properties such as chemical resistance, heat resistance and mechanical strength.

The present inventors have evaluated a molded product formed by using the ETFE disclosed in Patent Document 1 and as a result found that chemical resistance and heat resistance, particularly tensile strength after chemical resistance test, tensile strength after heat aging test and tensile elongation after heat aging test, should still be improved.

Under these circumstances, the object of the present invention is to provide a copolymer from which a molded product excellent in tensile strength after chemical resistance test, tensile strength after heat aging test and tensile elongation after heat aging test can be formed. Another object of the present invention is to provide a composition comprising the copolymer and a molded product obtained by molding the copolymer.

### SOLUTION TO PROBLEM

The present inventors have conducted extensive studies on the above objects and as a result found that a molded product excellent in tensile strength after chemical resistance test, tensile strength after heat aging test and tensile elongation after heat aging test, can be formed by using a copolymer containing units based on tetrafluoroethylene, units based on ethylene and units based on a compound represented by the after-described formula (1) or (2), that has contents of the respective units within predetermined ranges and that has a melt flow rate of 33 to 50 g/10 min.

That is, the present inventors have found that the above objects can be achieved by the following constitution.
[1] A copolymer containing units based on tetrafluoroethylene, units based on ethylene, and one or both of units based on a compound represented by the after-described formula (1) and units based on a compound represented by the after-described formula (2),
   wherein
   the total content of the units based on tetrafluoroethylene and the units based on ethylene is 80.0 to 98.1 mol% to all units contained in the copolymer,
   the content of the units based on tetrafluoroethylene is 49.0 mol% or more and less than 56.0 mol% to the total content of the units based on tetrafluoroethylene and the units based on ethylene,
   the content of the units based on the compound represented by the after-described formula (1) or the units based on the compound represented by the after-described formula (2) is 1.9 mol% or more and less than 3.2 mol% to all units contained in the copolymer; and
   the melt flow rate as measured in accordance with ASTM D3159 at a temperature of 297°C under a load of 49N is 33 to 50 g/10 min.
[2] The copolymer according to [1], which contains the units based on tetrafluoroethylene, the units based on ethylene and the units based on the compound represented by the formula (1), wherein
   the content of the units based on the compound represented by the formula (1) is 1.9 mol% or more and less than 3.2 mol% to all units contained in the copolymer.
[3] A composition comprising the copolymer as defined in [1] or [2].
[4] A solid composition comprising the copolymer as defined in [1] or [2], which has a TOC (total organic carbon) elution of 1,000 to 63,000 µg/cm².
[5] A solid composition comprising the copolymer as defined in [1] or [2], which has a moisture content of 0.02 to 0.8 mass%.
[6] A molded product, which is obtained by molding the copolymer as defined in [1] or [2].
[7] A molded product, which is obtained by molding the composition as defined in [3].
[8] A molded product, which is obtained by molding the solid composition as defined in [4].

### ADVANTAGEOUS EFFECTS OF INVENTION

According to the present invention, it is possible to provide a copolymer from which a molded product excellent in tensile strength after chemical resistance test, tensile strength after heat aging test and tensile elongation after heat aging test can be formed. Further, according to the present invention, it is possible to provide a composition comprising the copolymer, and a molded product obtained by molding the copolymer.

### DESCRIPTION OF EMBODIMENTS

Meanings of terms in the present invention are as follows.

" to " used to show a range of numerical values is used to include numerical values before and after it as the lower limit value and the upper limit value.

"Units" generally mean an atomic group derived from one molecule of a monomer, directly formed by polymerization of the monomer, and an atomic group obtained by chemical conversion of part of the atomic group. In the following, in some cases, units derived from a certain monomer will be represented by the name of the monomer, followed by "units".

"TFE units" are units based on tetrafluoroethylene of the copolymer, and "E units" are units based on ethylene of the copolymer. The "A units" are units based on a compound represented by the after-described formula (1) or on a compound represented by the after-described formula (2).

### [Copolymer]

The copolymer of the present invention (hereinafter sometimes referred to also as "the present copolymer") contains E units, TFE units and A units respectively in predetermined amounts. The present copolymer has a melt flow rate of 33 to 50 g/10 min as measured in accordance with ASTM D3159 at a temperature of 297°C under a load of 49N.

From the present copolymer, a molded product excellent in tensile strength after chemical resistance test, tensile strength after heat aging test and tensile elongation after heat aging test can be formed. The reason is not clearly understood yet in detail, however, estimated to be as follow.

In this specification, the tensile strength after chemical resistance test is determined in such a manner that a molded product obtained by using the copolymer is dipped in a chemical for a long period of time and then subjected to tensile test, and the tensile strength is evaluated based on the retention as between before and after dipping in the chemical. The tensile strength and tensile elongation after heat aging test are determined respectively in such a manner that a molded product obtained by using the copolymer is subjected to heat aging test and then subjected to tensile test, and they are evaluated based on changes of tensile strength and tensile elongation as between before and after the heat aging test.

One reason as to why a molded product excellent in the chemical resistance and heat resistance can be formed from the present copolymer is considered to be as follows. That is, a copolymer that has a content of the A units based on the compound represented by the after-described formula (1) or the compound represented by the formula (2) of 1.9 mol% or more and less than 3.2 mol% to all units contained in the copolymer and that has a melt flow rate of 33 to 50 g/10 min is used.

That is, by the content of the A units being 1.9 ml% or more to all units contained in the copolymer, the molded product does not melt down during the heat aging test, and a decrease of high temperature tension force can be suppressed, and thus a change of the tensile elongation after the heat aging test can be suppressed.

Further, by the content of the A units being less than 3.2 mol% to all units contained in the copolymer, the melting point of the copolymer does not decrease, and melt down of the molded product during the heat aging test can be suppressed, and thus a decrease of the tensile strength after heat aging test of a molded product to be formed can be suppressed.

By the melt flow rate being 33 g/10 min or more, the melt flow rate is not too low, whereby favorable moldability will be obtained, and thus a change of tensile elongation after heat aging test of a molded product to be formed can be suppressed.

By the melt flow rate being 50 g/10 min or less, the melt flow rate is not too high, and decomposition by long-term dipping in a chemical can be suppressed, and thus a change of tensile strength after chemical resistance test of a molded product to be formed can be suppressed.

As described above, it is estimated that by specifying the content of the A units and the melt flow rate, a molded product excellent in chemical resistance and heat resistance can be obtained.

The present copolymer is a copolymer containing TFE units based on tetrafluoroethylene, E units based on ethylene, and A units that are one or both of units based on a compound represented by the formula (1) and units based on a compound represented by the formula (2).

CZ₂=CX(CF₂)ₘY formula (1)

CF₂=CF-O-(CF₂)ₙF formula (2)

In the formula (1), X, Y and Z are each independently a hydrogen atom or a fluorine atom, and m is an integer of 2 to 6.

In the formula (2), n is an integer of 1 to 6.

In the compound represented by the formula (1), X and Z are each preferably a hydrogen atom in view of polymerizability.

Y is preferably a fluorine atom in view of heat resistance.

m is preferably 2 to 6, more preferably 4.

The compound represented by the formula (1) is preferably CH₂=CH(CF₂)₂F, CH₂=CH(CF₂)₄F, CH₂=CH(CF₂)₆F, CH₂=CF(CF₂)₄F or CH₂=CF(CF₂)₃H, more preferably CH₂=CH(CF₂)₄F (hereinafter sometimes referred to also as "PFBE").

Specific examples of the compound represented by the formula (2) include CF₂=CF-O-(CF₂)F, CF₂=CF-O-(CF₂)₂F, CF₂=CF-O-(CF₂)₃F, CF₂=CF-O-(CF₂)₄F, CF₂=CF-O-(CF₂)₅F and CF₂=CF-O-(CF₂)₆F. Among them, preferred is CF₂=CF-O-(CF₂)₃F corresponding to the compound wherein n is 3.

The present copolymer may contain, as the A units, one of units based on the compound represented by the formula (1) (hereinafter sometimes referred to also as "A1 units") and units based on the compound represented by the formula (2) (hereinafter sometimes referred to also as "A2 units"), or may contain both the A1 units and the A2 units.

That is, in a case where the present copolymer contain both the A1 units and the A2 units, "the content of the A units" means the total of the content of the A1 units and the content of the A2 units.

The content of the A units is 1.9 mol% or more and less than 3.2 mol% to all units contained in the present copolymer.

By the content of the A units being 1.9 mol% or more to all units contained in the copolymer, a molded product excellent in tensile elongation after heat aging test and also excellent in optical properties can be formed.

Further, by the content of the A units being less than 3.2 mol% to all units contained in the copolymer, a molded product excellent in tensile strength after heat aging test and also excellent in tensile strength after chemical resistance test can be formed.

The content of the A units is preferably 1.9 to 3.0 mol% to all units contained in the copolymer, in view of good balance of tensile strength after chemical resistance test, tensile strength after heat aging test and tensile elongation after heat aging test.

The present copolymer is preferably a copolymer containing the TFE units, the E units and the A1 units, or a copolymer containing the TFE units, the E units and the A2 units, and in view of excellent long-term folding endurance, more preferably a copolymer containing the E units, the TFE units and the A1 units.

In a case where the present copolymer is a copolymer containing the TFE units, the E units and the A1 units, the content of the A1 units is 1.9 mol% or more and less than 3.2 mol% to all units contained in the present copolymer, and is preferably 1.9 to 3.0 mol% from the above viewpoint.

In a case where the present copolymer is a copolymer containing the TFE units, the E units and the A2 units, the content of the A2 units is 1.9 mol% or more and less than 3.2 mol% to all units contained in the present copolymer, and is preferably 1.9 to 3.1 mol% from the above viewpoint.

In the present copolymer, the total content of the TFE units and the E units is 80.0 to 98.1 mol% to all units contained in the present copolymer.

The total content of the TFE units and the E units is preferably 85.0 mol% or more, more preferably 88.0 mol% or more in view of excellent long-term heat resistance. The total content of the TFE units and the E units is preferably 97.0 mol% or less in view of excellent durability to repeated application of load.

In the present copolymer, the content of the TFE units is 49.0 mol% or more and less than 56.0 mol% to the total content of the TFE units and the E units.

The content of the TFE units is, in view of excellent heat resistance, preferably 50.0 mol% or more and less than 56.0 mol%, more preferably 52.0 mol% or more and less than 56.0 mol% to the total content of the TFE units and the E units.

The content of the TFE units is preferably 40.0 to 54.9 mol%, more preferably 45.0 to 54.5 mol%, particularly preferably 50.0 to 54.5 mol% to all units contained in the present copolymer. When the content is the lower limit value or more, the resulting molded product will be more excellent in heat resistance, and when it is the upper limit value or less, the resulting molded product will be more excellent in mechanical properties.

The content of the E units is preferably 36.0 to 50.0 mol%, more preferably 40.0 to 48.0 mol%, particularly preferably 42.0 to 47.0 mol% to all units contained in the present copolymer. When the content is the lower limit value or more, the resulting molded product will be more excellent in mechanical properties, and when it is the upper limit value or less, the resulting molded product will be more excellent in heat resistance.

The present copolymer may contain units based on a monomer other than tetrafluoroethylene, ethylene, the compound represented by the formula (1) and the compound represented by the formula (2).

Specific examples of other monomer include a fluoroolefin (e.g. vinyl fluoride, vinylidene fluoride, trifluoroethylene, hexafluoropropylene, and hexafluoroisobutylene, excluding the compound represented by the formula (1) and the compound represented by the formula (2)); CF₂=CFORf¹SO₂X¹ (wherein Rf¹ is a C₁₋₁₀ perfluoroalkylene group which may contain an oxygen atom between carbon atoms, X¹ is a halogen atom or a hydroxy group); CF₂=CFORf²CO₂X² (wherein Rf² is a C₁₋₁₀ perfluoroalkylene group which may contain an oxygen atom between carbon atoms, X² is a hydrogen atom or a C₁₋₃ alkyl group); CF₂=CF(CF₂)pOCF=CF₂ (wherein p is 1 or 2); a fluorinated monomer having a cyclic structure (e.g. perfluoro(2,2-dimethyl-1,3-dioxol), 2,2,4-trifluoro-5-trifluoromethoxy-1,3-dioxol, perfluoro(2-methylene-4-methyl-1,3-dioxolane)); and itaconic acid, itaconic anhydride, citraconic acid and citraconic anhydride.

In a case where the present copolymer contains units based on the other monomer, the content of the units based on the other monomer is preferably 2.0 mol% or less, more preferably 1.0 mol% or less to all units contained in the present copolymer.

The present copolymer preferably comprises the TFE units, the E units and the A units, more preferably comprises the TFE units, the E units and the A1 units.

### <Melt flow rate>

The melt flow rate (hereinafter sometimes referred to also as "MFR") of the present copolymer is 33 to 50 g/10 min.

By MFR of the present copolymer being 33 g/10 min or more, a molded product excellent in tensile elongation after heat aging test and also excellent in tensile strength after chemical resistance test and in optical properties can be formed.

Further, by MFR of the present copolymer being 50 g/10 min or less, a molded product excellent in tensile strength after chemical resistance test and also excellent in tensile elongation after chemical resistance test can be formed.

MFR of the present copolymer is preferably 33 to 48 g/10 min in view of excellent balance between tensile strength after chemical resistance test, tensile strength after heat aging teat and the tensile elongation after heat aging test.

As a specific example of a method of adjusting MFR of the present copolymer to be within the above range, adjustment of the molecular weight of the present copolymer may be mentioned. The higher the molecular weight of the present copolymer is, the lower MFR is.

MFR of the present copolymer means the mass of the present copolymer which flows out of an orifice having a diameter of 2 mm and a length of 8 mm over a period of 10 minutes, measured in accordance with ASTM D3159 at a temperature of 297°C under a load of 49N.

By the present copolymer having MFR of 33 g/10 min or more and having a content of the A units of 1.9 mol% or more to all units contained in the copolymer, a molded product excellent in optical properties (particularly in haze) can be formed.

### <Melting point>

The melting point of the present copolymer is preferably 245°C or higher, more preferably 248°C or higher, particularly preferably 249°C or higher, in view of more excellent crack resistance.

The melting point of the present copolymer is preferably 290°C or lower, more preferably 280°C or lower, particularly preferably 270°C or lower, whereby the present copolymer has excellent moldability.

Specific examples of a method of adjusting the melting point of the present copolymer to be within the above range include lowering the polymerization temperature at the time of producing the present copolymer and adjusting the content of the A units in the present copolymer.

The melting point of the present copolymer is a temperature corresponding to an endothermic peak when the present copolymer is heated at a heating rate of 10°C/min in an air atmosphere using a scanning differential thermal analyzer.

### <Production method>

The present copolymer may be produced by a known method such as bulk polymerization, solution polymerization, suspension polymerization or emulsion polymerization, using the above monomers (ethylene, tetrafluoroethylene, and one or both of the compound represented by the formula (1) and the compound represented by the formula (2)), and is produced preferably by solution polymerization.

For production of the present copolymer, in addition to the above monomers, a polymerization initiator, a polymerization medium, a chain transfer agent, etc., may be used.

The polymerization initiator is preferably a radical polymerization initiator with a temperature at which the half life time is 10 hours being 0 to 100°C, particularly preferably a radical polymerization initiator with the temperature being 20 to 90°C. Specific examples of the polymerization initiator include various polymerization initiators exemplified in e.g. WO2013/015202.

The polymerization initiator may be used alone or in combination of two or more.

The amount of the polymerization initiator used is preferably 0.01 to 0.9 parts by mass, particularly preferably 0.05 to 0.5 parts by mass per 100 parts by mass of the monomers used.

The polymerization medium may be a perfluorocarbon, a hydrofluorocarbon, a hydrofluoroether or the like. Specific examples of the polymerization medium include the polymerization medium exemplified in WO2013/015202.

The polymerization medium may be used alone or in combination of two or more.

The amount of the polymerization medium used is preferably 5 times by mass or more, more preferably 7 times by mass or more, to the amount of the monomers used. Further, the amount is preferably 20 times by mass or less, more preferably 17 times by mass or less.

The chain transfer agent is preferably an alcohol such as methanol, ethanol, 2,2,2-trifluoroethanol, 2,2,3,3-tetrafluoropropanol, 1,1,1,3,3,3-hexafluoroisopropanol or 2,2,3,3,3-pentafluoropropanol; a hydrocarbon such as n-pentane, n-hexane or cyclohexane; a hydrofluorocarbon such as CF₂H₂; a ketone such as acetone; a mercaptan such as methyl mercaptan; an ester such as methyl acetate or ethyl acetate; or an ether such as diethyl ether or methyl ethyl ether, which has a high chain transfer constant and which can be used in a small amount.

Particularly, preferred is at least one member selected from the group consisting of alcohols, hydrocarbons and hydrofluorocarbons, which have a higher chain transfer constant and provide high stability of terminal end groups of the present copolymer, more preferred is at least one member selected from the group consisting of alcohols and hydrocarbons, particularly preferred is an alcohol. Among alcohols, methanol or ethanol is particularly preferred. In view of reactivity and availability, methanol is particularly preferred. The chain transfer agent may be used in combination of two or more types.

The amount of the chain transfer agent used is preferably 0.001 times by mass or more, more preferably 0.005 times by mass or more, to the amount of the monomers used. The amount is preferably 5 times by mass or less, more preferably 4 times by mass or less.

The polymerization temperature is preferably 15 to 60°C, more preferably 20 to 58°C, particularly preferably 25 to 55°C. When the polymerization temperature is 15°C or more, excellent polymerizability will be achieved. When the polymerization temperature is 60°C or less, the melting point of the present copolymer can be improved.

The polymerization pressure is preferably 0.5 to 3.0 MPa, particularly preferably 0.9 to 2.5 MPa.

The polymerization time is preferably 1 to 12 hours.

### [Composition]

The composition of the present invention (hereinafter sometimes referred to also as "the present composition") contains the above present copolymer. By using the present composition, which contains the present copolymer, a molded product excellent in tensile strength after chemical resistance test, tensile strength after heat aging test and tensile elongation after heat aging test can be formed.

The content of the present copolymer is, to the total mass of the present composition, preferably 50 mass% or more and less than 100 mass%, more preferably 70 mass% or more and less than 100 mass%, particularly preferably 90 mass% or more and less than 100 mass%.

### [Solid composition]

The solid composition of the present invention (hereinafter sometimes referred to also as "the present solid composition") contains the present copolymer, and TOC (total organic carbon) elution to the surface area of the present solid composition is 1,000 to 63,000 µg/cm². The TOC elution is preferably 50,000 or less, more preferably 30,000 or less, whereby adhesive strength after hot water resistance test will be high. The TOC elution is preferably 2,000 or more, more preferably 5,000 or more, whereby tensile strength after heat aging test will be high.

Specific examples of a method of adjusting the TOC elution of the present solid composition to be within the above range include adjustment of the purity of water to be used at the time of granulating the present copolymer or the moisture content of the copolymer.

The present solid composition contains the present copolymer, and the moisture content to the mass of the present solid composition is preferably 0.02 to 0.8 mass%. The moisture content is preferably 0.5 mass% or less, more preferably 0.3 mass% or less, whereby the TOC elution will be low. The moisture content is preferably 0.03 mass% or more, more preferably 0.04 mass% or more, whereby tensile strength after heat aging test will be high.

Specific examples of a method of adjusting the moisture content of the present solid composition to be within the above range include prolonging a time over which a state of 100°C or higher is kept at the time of drying after granulating the present copolymer.

### <Other component>

The present composition may contain a component other than the above. Specific examples of such other component include a resin other than the present copolymer, a thermal stabilizer, an antioxidant, a coloring agent, an ultraviolet absorber, a filler, a crosslinking agent, a crosslinking aid and an organic peroxide.

In a case where the present composition contains such other component, the content of the other component is preferably 0.0000001 to 70 parts by mass, more preferably 0.0000005 to 60 parts by mass, particularly preferably 0.000001 to 50 parts by mass per 100 parts by mass of the present copolymer in the present composition.

As a method for producing the present composition, melt-kneading the present copolymer and the above component used as required by a known method may be mentioned.

### [Molded product]

The molded product of the present invention is obtained by molding the above present copolymer or the above present composition. The present molded product, which contains the present copolymer, is excellent in tensile strength after chemical resistance test, tensile strength after heat aging test and tensile elongation after heat aging test .

Specific examples of the molding method include injection molding, extrusion, blow molding, press molding, rotational molding and electrostatic coating. The molded product is formed preferably by press molding. Injection molding is also preferred, by which an injection-molded product with beautiful appearance can be obtained without eroding the mold used for molding.

Specific examples of the molded product of the present invention include nuts, bolts, joints, films, bottles, gaskets, electric wire coverings, tubes, hoses, pipes, valves, sheets, seals, packings, tanks, rollers, containers, plug cocks, connectors, filter housings, filter cages, flowmeters, pumps, wafer carriers and wafer boxes.

The present copolymer, the present composition and the above molded product are useful for the following applications.

Fluid transfer members for food production apparatus including food packaging films, lining materials, packings, sealing materials and sheets of liquid transfer lines used in food production process;
chemical transfer members including stoppers for chemicals, packaging films, lining materials, packings, sealing materials and sheets of liquid transfer lines used in chemical production process;
inner lining members for chemical tanks and piping in chemical plants or semiconductor plants;
O rings, square rings, tubes, packings, valve cores, hoses and sealing materials to be used for automobile fuel systems and peripheral apparatus, and fuel transfer members such as hoses and sealing materials to be used for automobile AT apparatus.
other automobile members including carburetor flange gasket, shaft seals, valve stem seals, sealing materials and hoses to be used for automobile engines and peripheral apparatus, and automobile brake hoses, air conditioner hoses, radiator hoses and electric wire covering materials;
chemical transfer members for semiconductor devices, including O rings, square rings, tubes, packings, valve cores, hoses, sealing materials, rolls, gaskets, diaphragms and joints of a semiconductor production apparatus;
coating and ink members such as coating rolls, hoses, tubes, and ink containers for coating equipment;
food and drink transfer members including tubes such as tubes for food and drink and hoses for food and drink, hoses, belts, packings and joints, food packaging material and glass cooking devices;
waste transfer members including tubes and hoses for waste transfer;
high temperature liquid transfer members including tubes and hoses for high temperature liquid transfer;
steam piping members including tubes and hoses for steam piping;
anticorrosive tapes for piping, including tapes to be wound onto piping on deck, etc.;
covering materials including electric wire covering materials, optical fiber covering materials, transparent surface covering materials to be provided on the light incident side surface of photovoltaic elements of solar cells and rear surface passivation;
sleeve members including diaphragms of diaphragm pumps and packings;
agricultural films, carrier films for fuel cells, and weatherproof covering for roof materials, side walls, etc.;
interior materials used in building fields, and glass covering materials for incombustible fire-proof safety glass, etc.; and
lining materials for laminated steel plates used in home appliance fields.

Particularly, the present molded product, which is excellent in tensile strength after chemical resistance test, tensile strength after heat aging test and tensile elongation after heat aging test, is suitable for chemical transfer members for semiconductor devices and covering materials.

### EXAMPLES

Now, the present invention will be described in detail with reference to Examples. Ex. 1 to 12 are Examples of the present invention, and Ex.13 to 18 are Comparative Examples. However, it should be understood that the present invention by no means restricted to such specific Examples.

Various measurement methods and evaluation methods are as follows.

### [Ratio of each units]

The content (mol%) of each units in the copolymer was calculated by ¹⁹F-NMR measurement. The content of E units in the copolymer was calculated by ¹H-NMR measurement and ¹³C-NMR measurement.

### [MFR (melt flow rate)]

The mass (g) of the copolymer which flowed out of an orifice having a diameter of 2 mm and a length of 8 mm over a period of 10 minutes was measured in accordance with ASTM D3159 at a temperature of 297°C under a load of 49N, using a melt indexer (manufactured by Technol Seven Co., Ltd.), and taken as MFR (g/10 min).

### [Melting point]

The melting point (°C) of the copolymer was obtained from an endothermic peak obtained by heating the copolymer to 300°C at a rate of 10°C/min in an air atmosphere using a scanning differential thermal analyzer (tradename "DSC7020", manufactured by Hitachi High-Tech Science Corporation).

### <Film forming>

The copolymer obtained in each Ex. was pressed within a temperature of the melting point of the copolymer +50°C±20°C (for example, 280°C to 320°C in a case where the copolymer has a melting point of 250°C) to obtain a 200 µm thick film and a 1 mm thick film. The pressing was conducted using a heat pressing machine (manufactured by TESTER SANGYO CO., LTD., "SA-301").

Using the obtained film, the following evaluation tests were conducted.

### <Heat resistance>

From the 1 mm thick film obtained, a dumbbell test specimen as specified by JIS K6301, No. 3 was cut out. Using this test specimen, the tensile elongation (unit:%) was measured by stretching the specimen at a tensile rate of 200 mm/min in accordance with the method of ASTM D-3159, using Strograph (manufactured by Toyo Seiki Seisaku-sho, Ltd.), setting the distance between chucks at 35 mm, in a room temperature (temperature 23±2°C) environment.

This test specimen was charged into a gear oven (forced air circulation oven type heat aging tester) (manufactured by Toyo Seiki Seisaku-sho, Ltd.) to conduct thermal exposure treatment. For the thermal exposure treatment, the temperature was set at 250°C and heat treatment was conducted for 24 hours after the charging. The tensile elongation of the test specimen after the heat treatment was measured in the same manner as above. The ratio of the tensile elongation after the heat treatment, based on the tensile elongation before the heat treatment being 100%, was calculated and evaluated based on the following standards.

### (Tensile elongation evaluation standards)

O: Tensile elongation after heat aging test being 50% or more.
△: Tensile elongation after heat aging test being 15% or more and less than 50%.
×: Tensile elongation after heat aging test being less than 15%.

### <Optical property (haze)>

In accordance with JIS K7105, the haze (unit: %) of the 200 µm thick film was measured by a haze meter (manufactured by Nippon Seimitsu Kogaku, model: SEP-T).

From the measured value of the haze, optical property of each film was evaluated based on the following evaluation standards.

### (Optical property evaluation standards)

○: haze being less than 10.0%
×: haze being 10.0% or more

### <Chemical resistance>

The tensile strength of the film obtained by the above pressing was measured in accordance with ASTM D-3159.

From the 1 mm thick film obtained, a dumbbell test specimen as specified by ASTM-D638 Type V was cut out. Using the obtained test specimen, the tensile strength (unit: MPa) before chemical resistance test was measured by stretching the specimen at a tensile rate of 200 mm/min, using Strograph (manufactured by Toyo Seiki Seisaku-sho, Ltd.), setting the distance between chucks at 35 mm, in a room temperature (temperature 23±2°C) environment.

Similarly, from the 1 mm thick film obtained, a dumbbell test specimen as specified by ASTM-D638 Type V was cut out.

In a pressure container having a clean polytetrafluoroethylene inner cylinder, a chemical and the test specimen were put, and the pressure container was sealed, to dip the test specimen in the chemical at 60°C for 168 hours (7 days). Then, the test specimen was taken out and cooled to 23°C, and the tensile strength after the chemical resistance test was measured in accordance with the above method. From the ratio of the tensile strength of the test specimen after the test to the tensile strength of the test specimen before the test, the retention (%) of the tensile strength as between before and after the chemical resistance test was calculated.

As the chemical, ethyl acetate, methyl isobutyl ketone and butyl cellosolve were selected, and the dipping test was conducted using each chemical to calculate the tensile strength retention as between before and after the test. An arithmetic mean of the tensile strength retentions obtained by using the three types of the chemicals was obtained, and from the obtained arithmetic mean, the chemical resistance of each film was evaluated based on the following evaluation standards.

### (Chemical resistance evaluation standards)

O: Arithmetic mean of tensile strength retention for three types of chemicals being 85% or more.
×: Arithmetic mean of tensile strength retention for three types of chemicals being less than 85%.

### <Heat resistance>

From the 1 mm thick film obtained, a dumbbell test specimen as specified by JIS K6301 No. 3 was cut out. Using the obtained test specimen, tensile strength (unit: Mpa) and tensile elongation (unit:%) before heat aging test were measured by stretching the specimen with a gauge length of 20 mm at a tensile rate of 200 mm/min, using Strograph (manufactured by Toyo Seiki Seisaku-sho, Ltd.) in a constant temperature and constant humidity environment controlled to a temperature of 23±2°C and a humidity of 50%±10%.

Similarly, from the 1 mm thick film obtained, a dumbbell test specimen as specified by JIS K6301 No. 3 was cut out

The obtained test specimen was charged into a gear oven (forced air circulation oven type heat aging tester) (manufactured by Toyo Seiki Seisaku-sho, Ltd.) to conduct thermal exposure treatment. For the thermal exposure treatment, the temperature was set at 200°C and heat treatment was conducted for 192 hours after the charging. The heat-treated test specimen was subjected to the tensile test in accordance with the above method, and tensile strength and tensile elongation after the heat aging test were measured.

From the ratio of the tensile strength after the heat treatment to the tensile strength before the heat treatment, a change (%) of the tensile strength by the heat aging test was calculated, and from the ratio of the tensile elongation after the heat treatment to the tensile elongation before the hat treatment, a change (%) of the tensile elongation by the heat aging test was calculated.

From the calculated change of the tensile strength, based on the following evaluation standards, the tensile strength and the tensile elongation as between before and after the heat aging test of each film were evaluated.

### (Evaluation standards of change of tensile strength)

O: Change of tensile strength as between before and after heat aging test being 66% or more.
×: Change of tensile strength as between before and after heat aging test being less than 66%.

### (Evaluation standards of change of tensile elongation)

O: Change of tensile elongation as between before and after heat aging test being less than 120%.
×: Change of tensile elongation as between before and after heat aging test being 120% or more.

### <TOC elution>

In accordance with SEMI F57 "Specification for High Purity Polymer Materials and Components Used in Ultrapure Water and Liquid Chemical Distribution Systems", the TOC (total organic carbon) elution was measured.
and a PFA container to be used were preliminarily washed with ultrapure water in accordance with SEMI F40.

30 g of the preliminarily washed sample was put in the preliminarily washed PFA container and 100 ml of ultrapure water was poured to entirely dip the sample, and the container was sealed to conduct elution at 85°C±3°C for 7 days.

The concentration of each component in the eluate was measured by TOC-L CPH (manufactured by SHIMADZU Corporation) and the elution per surface area was obtained.

### <Moisture content>

The moisture content was measured by the following procedure.

The moisture content was measured from the mass reduction as between before and after test, using an infrared moisture analyzer "FD610" (manufactured by Kett Electric Laboratory Co. Ltd.) under conditions of a drying temperature of 140°C, timed halting mode 10 minutes and a sample (solid composition obtained in each Ex.) mass of 100 g.

### [Evaluation test]

### <Production of coated test specimen>

A SUS304 stainless steel plate of 50 mm × 150 mm × 2 mm in thickness was baked at 400°C for 1 hour, and its surface was sand-blasted with alumina particles (manufactured by Pacific Rundum Co., Ltd., "White Fused Alumina 50A (tradename)"), and the blast particles were removed by an air gun to obtain a substrate. The substrate was coated with particles of the solid composition obtained in each Ex., ground to an average particle size of 80 to 120 µm, by electrostatic coating, and baked in an oven at 275°C for 15 minutes. The coating step and the baking step were conducted respectively 4 times to obtain a coated article having an about 250 µm thick coating layer formed of the powder, formed on the substrate.

### <Hot water resistance test (PCT peel test)>

Parallel cuts at 10 mm intervals in lengthwise direction were made by a cutter knife on the coating film formed on the coated test specimen. At a portion having no primer layer at one edge of the coated test specimen, the outermost layer and the top coat layer were separated from the substrate and taken as a grip area. The coated test specimen was treated by a pressure cooker (high temperature steam pressure oven) at 130°C for 24 hours, and the grip area was fixed to a chuck of a tensile test machine and 90 degree peel strength (unit: N/cm) was measured at a tensile rate of 50 mm/min.

Adhesive strength was evaluated based on the measured value in accordance with the following standards.

### (Adhesive strength evaluation standards)

○: 1.5 N/cm or more
×: less than 1.5 N/cm

### [Ex. 1]

1167 g of a fluorinated organic solvent (manufactured by AGC Inc., "ASAHIKLIN (registered trademark) AE-3000", CF₃CH₂OCF₂CF₂H), 10.7 g of CH₂=CH(CF₂)₄F (PFBE) and 3.6 g of methanol were charged into a polymerization vessel having an internal capacity of 1.2 L, equipped with a stirrer, which had been deaerated. The solution in the polymerization vessel was heated to 72°C (polymerization temperature), 180 g of a gas mixture of TFE/ethylene=88/12 (molar ratio) was charged, and the pressure in the polymerization vessel was increased to 1.5 MPa [gauge].

9.4 ml of a polymerization initiator solution having tert-butyl peroxypivalate dissolved at a concentration of 1 mass% in AE-3000 was charged at initial stage to conduct polymerization. A gas mixture of TFE/ethylene=54/46 (molar ratio) was continuously charged so that the pressure in the polymerization vessel was kept at 1.5 MPa [gauge] during the polymerization reaction. PFBE in an amount corresponding to 3 mol% to the total number of moles of TFE and ethylene to be charged during the polymerization was continuously charged.

When the amount of TFE/ethylene introduced reached 110 g, the polymerization was terminated to obtain copolymer 1 in Ex. 1.

The composition of the copolymer 1 was TFE units/E units/PFBE units (molar ratio)=53.4/43.6/3.0. The "PFBE units" are units based on CH₂=CH(CF₂)₄F in each copolymer. The copolymer 1 had a MFR of 34 g/10 min and a melting point of 242°C.

Pure water was added to the obtained copolymer 1 and heated with stirring to remove the solvent. Water was removed from the mixture of the pure water and the copolymer 1, and the mixture was dried so that a drying temperature of 100°C or higher was kept for 3.7 hours to obtain solid composition 1. The dried solid composition 1 had a TOC elution of 7,200 µg/cm² and a moisture content of 0.05 mass%.

### [Ex. 2]

Copolymer 2 of Ex. 2 was obtained in the same manner as in Ex. 1 except that the amount of PFBE first charged to the polymerization vessel was changed to 6.9 g and the amount of methanol to 6.0 g, the amount of the polymerization initiator solution charged at initial stage was changed to 5.9 mL, and the amount of PFBE continuously charged during the polymerization was changed to an amount corresponding to 1.9 mol% to the total number of moles of TFE and ethylene.

The composition of the copolymer 2 was TFE units/E units/PFBE units (molar ratio)=53.8/44.3/1.9. The copolymer 2 had a MFR of 35 g/10 min and a melting point of 252°C.

Drying was conducted in the same manner as in Ex. 1 except that a drying temperature of 100°C or higher was kept for 3.0 hours to obtain solid composition 2. The dried solid composition had a TOC elution of 9,100 µg/cm² and a moisture content of 0.08 mass%.

### [Ex. 3]

Copolymer 3 of Ex. 3 was obtained in the same manner as in Ex. 1 except that the amount of PFBE first charged to the polymerization vessel was changed to 10.1 g and the amount of methanol to 4.1 g, the amount of the polymerization initiator solution charged at initial stage was changed to 8.8 mL, and the amount of PFBE continuously charged during the polymerization was changed to an amount corresponding to 2.8 mol% to the total number of moles of TFE and ethylene.

The composition of the copolymer 3 was TFE units/E units/PFBE units (molar ratio)= 53.5/43.7/2.8. The copolymer 3 had a MFR of 36 g/10 min and a melting point of 244°C.

Drying was conducted in the same manner as in Ex. 1 except that a drying temperature of 100°C or higher was kept for 2.4 hours to obtain solid composition 3. The dried solid composition had a TOC elution of 11,800 µg/cm² and a moisture content of 0.12 mass%.

### [Ex. 4]

Copolymer 4 of Ex. 4 was obtained in the same manner as in Ex. 1 except that the amount of PFBE first charged to the polymerization vessel was changed to 8.1 g and the amount of methanol to 5.4 g, the amount of the polymerization initiator solution charged at initial stage was changed to 6.9 mL, and the amount of PFBE continuously charged during the polymerization was changed to an amount corresponding to 2.2 mol% to the total number of moles of TFE and ethylene.

The composition of the copolymer 4 was TFE units/E units/PFBE units (molar ratio)= 53.8/44.0/2.2. The copolymer 4 had a MFR of 37 g/10 min and a melting point of 250°C.

Drying was conducted in the same manner as in Ex. 1 except that a drying temperature of 100°C or higher was kept for 3.4 hours to obtain solid composition 4. The dried solid composition had a TOC elution of 7,700 µg/cm² and a moisture content of 0.06 mass%.

### [Ex. 5]

Copolymer 5 of Ex. 5 was obtained in the same manner as in Ex. 1 except that the amount of PFBE first charged to the polymerization vessel was changed to 9.2 g and the amount of methanol to 4.9 g, the amount of the polymerization initiator solution charged at initial stage was changed to 7.8 mL, and the amount of PFBE continuously charged during the polymerization was changed to an amount corresponding to 2.5 mol% to the total number of moles of TFE and ethylene.

The composition of the copolymer 5 was TFE units/E units/PFBE units (molar ratio)= 53.6/43.9/2.5. The copolymer 5 had a MFR of 40 g/10 min and a melting point of 247°C.

Drying was conducted in the same manner as in Ex. 1 except that a drying temperature of 100°C or higher was kept for 2.8 hours to obtain solid composition 5. The dried solid composition had a TOC elution of 9,800 µg/cm² and a moisture content of 0.09 mass%.

### [Ex. 6]

Copolymer 6 of Ex. 6 was obtained in the same manner as in Ex. 1 except that the amount of PFBE first charged to the polymerization vessel was changed to 7.3 g and the amount of methanol to 6.1 g, the amount of the polymerization initiator solution charged at initial stage was changed to 6.3 mL, and the amount of PFBE continuously charged during the polymerization was changed to an amount corresponding to 2.0 mol% to the total number of moles of TFE and ethylene.

The composition of the copolymer 6 was TFE units/E units/PFBE units (molar ratio)= 53.7/44.3/2.0. The copolymer 6 had a MFR of 41 g/10 min and a melting point of 251 °C.

Drying was conducted in the same manner as in Ex. 1 except that a drying temperature of 100°C or higher was kept for 2.0 hours to obtain solid composition 6. The dried solid composition had a TOC elution of 14,600 µg/cm² and a moisture content of 0.16 mass%.

### [Ex. 7]

Copolymer 7 of Ex. 7 was obtained in the same manner as in Ex. 1 except that the amount of PFBE first charged to the polymerization vessel was changed to 10.4 g and the amount of methanol to 4.2 g, the amount of the polymerization initiator solution charged at initial stage was changed to 9.1 mL, and the amount of PFBE continuously charged during the polymerization was changed to an amount corresponding to 2.9 mol% to the total number of moles of TFE and ethylene.

The composition of the copolymer 7 was TFE units/E units/PFBE units (molar ratio)= 53.3/43.8/2.9. The copolymer 7 had a MFR of 42 g/10 min and a melting point of 243°C.

Drying was conducted in the same manner as in Ex. 1 except that a drying temperature of 100°C or higher was kept for 2.5 hours to obtain solid composition 7. The dried solid composition had a TOC elution of 11,000 µg/cm² and a moisture content of 0.11 mass%.

### [Ex. 8]

Copolymer 8 of Ex. 8 was obtained in the same manner as in Ex. 1 except that the amount of PFBE first charged to the polymerization vessel was changed to 8.5 g and the amount of methanol to 5.5 g, the amount of the polymerization initiator solution charged at initial stage was changed to 7.2 mL, and the amount of PFBE continuously charged during the polymerization was changed to an amount corresponding to 2.3 mol% to the total number of moles of TFE and ethylene.

The composition of the copolymer 8 was TFE units/E units/PFBE units (molar ratio)= 53.5/44.2/2.3. The copolymer 8 had a MFR of 45 g/10 min and a melting point of 249°C.

Drying was conducted in the same manner as in Ex. 1 except that a drying temperature of 100°C or higher was kept for 2.0 hours to obtain solid composition 8. The dried solid composition had a TOC elution of 13,900 µg/cm² and a moisture content of 0.15 mass%.

### [Ex. 9]

Copolymer 9 of Ex. 9 was obtained in the same manner as in Ex. 1 except that the amount of PFBE first charged to the polymerization vessel was changed to 10.4 g and the amount of methanol to 4.6 g, the amount of the polymerization initiator solution charged at initial stage was changed to 9.1 mL, and the amount of PFBE continuously charged during the polymerization was changed to an amount corresponding to 2.9 mol% to the total number of moles of TFE and ethylene.

The composition of the copolymer 9 was TFE units/E units/PFBE units (molar ratio)= 53.4/43.7/2.9. The copolymer 9 had a MFR of 50 g/10 min and a melting point of 243°C.

Drying was conducted in the same manner as in Ex. 1 except that a drying temperature of 100°C or higher was kept for 3.2 hours to obtain solid composition 9. The dried solid composition had a TOC elution of 8,400 µg/cm² and a moisture content of 0.07 mass%.

### [Ex. 10]

Copolymer 10 of Ex. 10 was obtained in the same manner as in Ex. 1 except that the amount of PFBE first charged to the polymerization vessel was changed to 6.9 g and the amount of methanol to 6.5 g, the amount of the polymerization initiator solution charged at initial stage was changed to 5.9 mL, and the amount of PFBE continuously charged during the polymerization was changed to an amount corresponding to 1.9 mol% to the total number of moles of TFE and ethylene.

The composition of the copolymer 10 was TFE units/E units/PFBE units (molar ratio)= 54.0/44.1/1.9. The copolymer 10 had a MFR of 46 g/10 min and a melting point of 252°C.

Drying was conducted in the same manner as in Ex. 1 except that a drying temperature of 100°C or higher was kept for 2.8 hours to obtain solid composition 10. The dried solid composition had a TOC elution of 9,790 µg/cm² and a moisture content of 0.09 mass%.

### [Ex. 11]

1167 g of a fluorinated organic solvent (manufactured by AGC Inc., "ASAHIKLIN (registered trademark) AE-3000", CF₃CH₂OCF₂CF₂H), 110.1 g of CF₂=CFO(CF₂)₂F (PPVE) and 7.8 g of methanol were charged into a polymerization vessel having an internal capacity of 1.2 L, equipped with a stirrer, which had been deaerated. The solution in the polymerization vessel was heated to 66°C (polymerization temperature), and a mixture of TFE/ethylene=76/24 (molar ratio) was added until the pressure in the polymerization vessel reached 1.5 MPa [gauge].

10.0 ml of a polymerization initiator solution having tert-butyl peroxypivalate dissolved at a concentration of 1 mass% in AE-3000 was charged at initial stage to conduct polymerization. A gas mixture of TFE/ethylene=5 4/46 (molar ratio) was continuously charged so that the pressure in the polymerization vessel was kept at 1.5 MPa [gauge] during the polymerization reaction. PPVE in an amount corresponding to 2.7 mol% to the total number of moles of TFE and ethylene to be charged during the polymerization was continuously charged.

When the amount of TFE/ethylene introduced reached 110 g, the polymerization was completed to obtain copolymer 11 in Ex. 11.

The composition of the copolymer 11 was TFE units/E units/PPVE units (molar ratio)=53.0/44.3/2.7. The "PPVE units" are units based on CF₂=CFO(CF₂)₂F in each copolymer. The copolymer 11 had a MFR of 35 g/10 min and a melting point of 253°C.

Pure water was added to the obtained copolymer 11 and heated in the same manner as in Ex. 11 with stirring to remove the solvent. Water was removed from the mixture of the pure water and the copolymer 11, and the mixture was dried so that a drying temperature of 100°C or higher was kept for 3.0 hours. The dried solid composition 11 had a TOC elution of 9,100 µg/cm² and a moisture content of 0.08 mass%.

### [Ex. 12]

Copolymer 12 of Ex. 12 was obtained in the same manner as in Ex. 11 except that the amount of PPVE first charged to the polymerization vessel was changed to 113.8 g and the amount of methanol to 8.1 g, the amount of the polymerization initiator solution charged at initial stage was changed to 11.0 mL, and the amount of PPVE continuously charged during the polymerization was changed to an amount corresponding to 2.9 mol% to the total number of moles of TFE and ethylene.

The composition of the copolymer 12 was TFE units/E units/PFBE units (molar ratio)= 52.8/44.3/2.9. The copolymer 12 had a MFR of 40 g/10 min and a melting point of 251 °C.

Drying was conducted in the same manner as in Ex. 11 except that a drying temperature of 100°C or higher was kept for 3.7 hours to obtain solid composition 12. The dried solid composition had a TOC elution of 7,040 µg/cm² and a moisture content of 0.05 mass%.

### [Ex. 13]

Copolymer 13 of Ex. 13 was obtained in the same manner as in Ex. 1 except that the amount of PFBE first charged to the polymerization vessel was changed to 11.5 g and the amount of methanol to 3.6 g, the amount of the polymerization initiator solution charged at initial stage was changed to 10.3 mL, and the amount of PFBE continuously charged during the polymerization was changed to an amount corresponding to 3.3 mol% to the total number of moles of TFE and ethylene.

The composition of the copolymer 13 was TFE units/E units/PFBE units (molar ratio)= 53.0/43.7/3.3. The copolymer 13 had a MFR of 41 g/10 min and a melting point of 240°C.

Drying was conducted in the same manner as in Ex. 1 except that a drying temperature of 100°C or higher was kept for 4.0 hours to obtain solid composition 13. The dried solid composition had a TOC elution of 6,200 µg/cm² and a moisture content of 0.04 mass%.

### [Ex. 14]

Copolymer 14 of Ex. 14 was obtained in the same manner as in Ex. 1 except that the amount of PFBE first charged to the polymerization vessel was changed to 8.8 g and the amount of methanol to 4.6 g, the amount of the polymerization initiator solution charged at initial stage was changed to 7.5 mL, and the amount of PFBE continuously charged during the polymerization was changed to an amount corresponding to 2.4 mol% to the total number of moles of TFE and ethylene.

The composition of the copolymer 14 was TFE units/E units/PFBE units (molar ratio)= 53.4/44.2/2.4. The copolymer 14 had a MFR of 31 g/10 min and a melting point of 248°C.

Drying was conducted in the same manner as in Ex. 1 except that a drying temperature of 100°C or higher was kept for 3.0 hours to obtain solid composition 14. The dried solid composition had a TOC elution of 9,100 µg/cm² and a moisture content of 0.08 mass%.

### [Ex. 15]

Copolymer 15 of Ex. 15 was obtained in the same manner as in Ex. 1 except that the amount of PFBE first charged to the polymerization vessel was changed to 6.0 g and the amount of methanol to 7.0 g, the amount of the polymerization initiator solution charged at initial stage was changed to 5.3 mL, and the amount of PFBE continuously charged during the polymerization was changed to an amount corresponding to 1.7 mol% to the total number of moles of TFE and ethylene.

The composition of the copolymer 15 was TFE units/E units/PFBE units (molar ratio)= 53.5/44.8/1.7. The copolymer 15 had a MFR of 43 g/10 min and a melting point of 254°C.

Drying was conducted in the same manner as in Ex. 1 except that a drying temperature of 100°C or higher was kept for 3.2 hours to obtain solid composition 15. The dried solid composition had a TOC elution of 8,400 µg/cm² and a moisture content of 0.07 mass%.

### [Ex. 16]

Copolymer 16 of Ex. 16 was obtained in the same manner as in Ex. 1 except that the amount of PFBE first charged to the polymerization vessel was changed to 7.3 g and the amount of methanol to 6.9 g, the amount of the polymerization initiator solution charged at initial stage was changed to 7.1 mL, and the amount of PFBE continuously charged during the polymerization was changed to an amount corresponding to 2.0 mol% to the total number of moles of TFE and ethylene.

The composition of the copolymer 16 was TFE units/E units/PFBE units (molar ratio)= 53.6/44.4/2.0. The copolymer 15 had a MFR of 64 g/10 min and a melting point of 251 °C.

Drying was conducted in the same manner as in Ex. 1 except that a drying temperature of 100°C or higher was kept for 2.0 hours to obtain solid composition 16. The dried solid composition had a TOC elution of 14,000 µg/cm² and a moisture content of 0.15 mass%.

### [Ex. 17]

Copolymer 17 of Ex. 17 was obtained in the same manner as in Ex. 1 except that the amount of PFBE first charged to the polymerization vessel was changed to 7.3 g and the amount of methanol to 6.1 g, the amount of the polymerization initiator solution charged at initial stage was changed to 6.3 mL, and the amount of PFBE continuously charged during the polymerization was changed to an amount corresponding to 2.0 mol% to the total number of moles of TFE and ethylene.

The composition of the copolymer 17 was TFE units/E units/PFBE units (molar ratio)= 53.8/44.2/2.0. The copolymer 17 had a MFR of 41 g/10 min and a melting point of 251°C.

Drying was conducted in the same manner as in Ex. 1 except that a drying temperature of 100°C or higher was kept for 0.5 hours to obtain solid composition 17. The dried solid composition had a TOC elution of 65,000 µg/cm² and a moisture content of 0.9 mass%.

### [Ex. 18]

Copolymer 18 of Ex. 18 was obtained in the same manner as in Ex. 1 except that the amount of PFBE first charged to the polymerization vessel was changed to 7.3 g and the amount of methanol to 6.0 g, the amount of the polymerization initiator solution charged at initial stage was changed to 6.3 mL, and the amount of PFBE continuously charged during the polymerization was changed to an amount corresponding to 2.0 mol% to the total number of moles of TFE and ethylene.

The composition of the copolymer 18 was TFE units/E units/PFBE units (molar ratio)= 53.7/44.3/2.0. The copolymer 18 had a MFR of 40 g/10 min and a melting point of 251 °C.

Drying was conducted in the same manner as in Ex. 1 except that a drying temperature of 100°C or higher was kept for 6.8 hours to obtain solid composition 18. The dried solid composition had a TOC elution of 975 µg/cm² and a moisture content of 0.01 mass%.

In Table 1, the composition of the copolymer, and the measurement results and the evaluation results of the copolymer in each Ex. are shown.

In the Table, the "TFE units (mol%)" row represents the content (unit: mol%) of the TFE units to all units contained in the present copolymer.

The "E units (mol%)" row represents the content (unit: mol%) of the E units to all units contained in the present copolymer.

The "TFE/(TFE+E) (mol%)" row represents the content (unit: mol%) of the TFE units to the total content of the TFE units and the E units.

The "A units (mol%)" row represents the content (unit: mol%) of the A units to all units contained in the present copolymer.

**Table 1**

| Table 1 | | | Ex. 1 | Ex. 2 | Ex. 3 | Ex. 4 | Ex. 5 | Ex. 6 | Ex. 7 | Ex. 8 |
|---|---|---|---|---|---|---|---|---|---|---|
| Copolymer composition | TFE units (mol%) | | 53.4 | 53.8 | 53.5 | 53.8 | 53.6 | 53.7 | 53.3 | 53.5 |
| | E units (mol%) | | 43.6 | 44.3 | 43.7 | 44.0 | 43.9 | 44.3 | 43.8 | 44.2 |
| | TFE/(TFE+E) (mol%) | | 55.1 | 54.8 | 55.0 | 55.0 | 55.0 | 54.8 | 54.9 | 54.8 |
| | A units (mol%) | | 3.0 | 1.9 | 2.8 | 2.2 | 2.5 | 2.0 | 2.9 | 2.3 |
| MFR (g/10 min) | | | 34 | 35 | 36 | 37 | 40 | 41 | 42 | 45 |
| Optical property | | Haze (%) | 4.2 | 9.4 | 5.2 | 7.7 | 6.3 | 7.8 | 3.8 | 7.2 |
| | | Evaluation | ○ | ○ | ○ | ○ | ○ | ○ | ○ | ○ |
| Chemical resistance test | Tensile strength retention (%) | Ethyl acetate | 84 | 85 | 84 | 86 | 85 | 87 | 83 | 85 |
| | | Methyl isobutyl ketone | 84 | 85 | 84 | 86 | 85 | 87 | 83 | 85 |
| | | Butyl cellosolve | 94 | 98 | 94 | 97 | 96 | 98 | 95 | 97 |
| | | Average | 87 | 89 | 87 | 90 | 89 | 91 | 87 | 89 |
| | Evaluation | | ○ | ○ | ○ | ○ | ○ | ○ | ○ | ○ |
| Heat aging test | Tensile strength | Change (%) | 73 | 68 | 69 | 68 | 69 | 69 | 71 | 71 |
| | | Evaluation | ○ | ○ | ○ | ○ | ○ | ○ | ○ | ○ |
| | Tensile elongation | Change (%) | 110 | 115 | 108 | 116 | 114 | 117 | 112 | 115 |
| | | Evaluation | ○ | ○ | ○ | ○ | ○ | ○ | ○ | ○ |

**Table 2**

| Table 1 (Continued) | | | Ex. 9 | Ex. 10 | Ex. 11 | Ex. 12 | Ex. 13 | Ex. 14 | Ex. 15 | Ex. 16 |
|---|---|---|---|---|---|---|---|---|---|---|
| Copolymer composition | TFE units (mol%) | | 53.4 | 54.0 | 53.0 | 52.8 | 53.0 | 53.4 | 53.5 | 53.6 |
| | E units (mol%) | | 43.7 | 44.1 | 44.3 | 44.3 | 43.7 | 44.2 | 44.8 | 44.4 |
| | TFE/(TFE+E) (mol%) | | 55.0 | 55.0 | 54.5 | 54.4 | 54.8 | 54.7 | 54.4 | 54.7 |
| | A units (mol%) | | 2.9 | 1.9 | 2.7 | 2.9 | 3.3 | 2.4 | 1.7 | 2.0 |
| MFR (g/10 min) | | | 50 | 46 | 35 | 40 | 41 | 31 | 43 | 64 |
| Optical property | | Haze (%) | 4.8 | 9.4 | 5.5 | 5.2 | 3.7 | 10.4 | 11.8 | 8.8 |
| | | Evaluation | ○ | ○ | ○ | ○ | ○ | × | × | ○ |
| Chemical resistance test | Tensile strength retention (%) | Ethyl acetate | 84 | 86 | 84 | 83 | 76 | 79 | 84 | 80 |
| | | Methyl isobutyl ketone | 84 | 85 | 85 | 83 | 80 | 81 | 86 | 79 |
| | | Butyl cellosolve | 95 | 96 | 94 | 95 | 95 | 93 | 91 | 94 |
| | | Average | 88 | 89 | 88 | 87 | 84 | 84 | 87 | 84 |
| | Evaluation | | ○ | ○ | ○ | ○ | × | × | ○ | × |
| Heat aging test | Tensile strength | Change (%) | 73 | 69 | 69 | 70 | 65 | 69 | 69 | 68 |
| | | Evaluation | ○ | ○ | ○ | ○ | × | ○ | ○ | ○ |
| | Tensile elongation | Change (%) | 112 | 117 | 108 | 113 | 110 | 121 | 123 | 120 |
| | | Evaluation | ○ | ○ | ○ | ○ | ○ | × | × | × |

As shown in Table 1, it was confirmed that a molded product excellent in all of tensile strength after the chemical resistance test, tensile strength after the heat aging test and tensile elongation after the heat aging test could be formed by use of a copolymer containing TFE units, E units and A units, wherein the total content of the TFE units and the E units is 80.0 to 98.1 mol% to all units contained in the copolymer; the content of the TFE units is 49.0 mol% or more and less than 56.0 mol% to the total content of the TFE units and the E units; the content of the A units is 1.9 mol% or more and less than 3.2 mol% to all units contained in the copolymer; and the MFR is 33 to 50 g/10 min (Ex. 1 to 12).

The measurement results and the evaluation results of the solid composition in each Ex. are shown in Table 2.

In the Table, the "TFE units (mol%)" row represents the content (unit: mol%) of the TFE units to all units contained in the present copolymer.

The "E units (mol%)" row represents the content (unit: mol%) of the E units to all units contained in the present copolymer.

The "TFE/(TFE+E) (mol%)" row represents the content (unit: mol%) of the TFE units to the total content of the TFE units and the E units.

The "A units (mol%)" row represents the content (unit: mol%) of the A units to all units contained in the present copolymer.

**Table 3**

| Table 2 | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| Copolymer composition | TFE units (mol%) | 53.4 | 53.8 | 53.5 | 53.8 | 53.6 | 53.7 | 53.3 | 53.5 | 53.4 | 54.0 |
| | E units (mol%) | 43.6 | 44.3 | 43.7 | 44.0 | 43.9 | 44.3 | 43.8 | 44.2 | 43.7 | 44.1 |
| | TFE/(TFE+E) (mol%) | 55.1 | 54.8 | 55.0 | 55.0 | 55.0 | 54.8 | 54.9 | 54.8 | 55.0 | 55.0 |
| | A units (mol%) | 3.0 | 1.9 | 2.8 | 2.2 | 2.5 | 2.0 | 2.9 | 2.3 | 2.9 | 1.9 |
| MFR (g/10 min) | | 34 | 35 | 36 | 37 | 40 | 41 | 42 | 45 | 50 | 46 |
| Time over which 100°C or higher was kept at drying | | 3.7 | 3.0 | 2.4 | 3.4 | 2.8 | 2.0 | 2.5 | 2.0 | 3.2 | 2.8 |
| Moisture content (mass%) | | 0.05 | 0.08 | 0.12 | 0.06 | 0.09 | 0.16 | 0.11 | 0.15 | 0.07 | 0.09 |
| TOC elution (µg/cm²) | | 7200 | 9100 | 11800 | 7700 | 9800 | 14600 | 11000 | 13900 | 8400 | 9790 |
| PCT adhesive strength | Adhesive strength (N/cm) | 1.7 | 1.8 | 2.0 | 1.7 | 1.9 | 2.2 | 2.0 | 2.2 | 1.8 | 1.9 |
| | Evaluation | ○ | ○ | ○ | ○ | ○ | ○ | ○ | ○ | ○ | ○ |
| Tensile elongation after heat aging test at 250°C for 24 hours | % | 71 | 68 | 64 | 71 | 67 | 59 | 65 | 61 | 69 | 67 |
| | Evaluation | ○ | ○ | ○ | ○ | ○ | ○ | ○ | ○ | ○ | ○ |

**Table 4**

| Table 2 (Continued) | | Ex. 11 | Ex. 12 | Ex. 13 | Ex. 14 | Ex. 15 | Ex. 16 | Ex. 17 | Ex. 18 |
|---|---|---|---|---|---|---|---|---|---|
| Copolymer composition | TFE units (mol%) | 53.0 | 52.8 | 53.0 | 53.4 | 53.5 | 53.6 | 53.8 | 53.7 |
| | E units (mol%) | 44.3 | 44.3 | 43.7 | 44.2 | 44.8 | 44.4 | 44.2 | 44.3 |
| | TFE/(TFE+E) (mol%) | 54.5 | 54.4 | 54.8 | 54.7 | 54.4 | 54.7 | 54.9 | 54.8 |
| | A units (mol%) | 2.7 | 2.9 | 3.3 | 2.4 | 1.7 | 2.0 | 2.0 | 2.0 |
| MFR (g/10 min) | | 35 | 40 | 41 | 31 | 43 | 64 | 41 | 40 |
| Time over which 100°C or higher was kept at drying | | 3.0 | 3.7 | 4.0 | 3.0 | 3.2 | 2.0 | 0.5 | 6.8 |
| Moisture content (mass%) | | 0.08 | 0.05 | 0.04 | 0.08 | 0.07 | 0.15 | 0.9 | 0.01 |
| TOC elution (µg/cm²) | | 9100 | 7040 | 6200 | 9100 | 8400 | 14000 | 65000 | 975 |
| PCT adhesive strength | Adhesive strength (N/cm) | 1.8 | 1.7 | 1.6 | 1.8 | 1.8 | 2.2 | 1 | 2.2 |
| | Evaluation | ○ | ○ | ○ | ○ | ○ | ○ | × | ○ |
| Tensile elongation after heat aging test at 250°C for 24 hours | % | 68 | 72 | 73 | 68 | 69 | 60 | 42 | 11 |
| | Evaluation | ○ | ○ | ○ | ○ | ○ | ○ | △ | × |

The entire disclosure of Japanese Patent Application No. 2023-099581 filed on June 16, 2023 including specification, claims and summary is incorporated herein by reference in its entirety.

## Claims

1. A copolymer containing units based on tetrafluoroethylene, units based on ethylene, and one or both of units based on a compound represented by the formula (1) and units based on a compound represented by the formula (2),
wherein
the total content of the units based on tetrafluoroethylene and the units based on ethylene is 80.0 to 98.1 mol% to all units contained in the copolymer,
the content of the units based on tetrafluoroethylene is 49.0 mol% or more and less than 56.0 mol% to the total content of the units based on tetrafluoroethylene and the units based on ethylene,
the content of the units based on the compound represented by the formula (1) or the units based on the compound represented by the formula (2) is 1.9 mol% or more and less than 3.2 mol% to all units contained in the copolymer; and
the melt flow rate as measured in accordance with ASTM D3159 at a temperature of 297°C under a load of 49N is 33 to 50 g/10 min:
CZ₂=CX(CF₂)ₘY formula (1)
CF₂=CF-O-(CF₂)ₙF formula (2)
in the formula (1), X, Y and Z are each independently a hydrogen atom or a fluorine atom, and m is an integer of 2 to 6; and
in the formula (2), n is an integer of 1 to 6.

2. The copolymer according to Claim 1, which contains the units based on tetrafluoroethylene, the units based on ethylene and the units based on the compound represented by the formula (1), wherein
the content of the units based on the compound represented by the formula (1) is 1.9 mol% or more and less than 3.2 mol% to all units contained in the copolymer.

3. A composition comprising the copolymer as defined in Claim 1 or 2.

4. A solid composition comprising the copolymer as defined in Claim 1 or 2, which has a TOC (total organic carbon) elution of 1,000 to 63,000 µg/cm².

5. A solid composition comprising the copolymer as defined in Claim 1 or 2, which has a moisture content of 0.02 to 0.8 mass%.

6. A molded product, which is obtained by molding the copolymer as defined in Claim 1 or 2.

7. A molded product, which is obtained by molding the composition as defined in Claim 3.

8. A molded product, which is obtained by molding the solid composition as defined in Claim 4.
